# EUROPÄISCHE PATENTSCHRIFT

(11) **EP 1 984 622 B1**
(45) Veröffentlichungstag und Bekanntmachung des Hinweises auf die Patenterteilung: **03.07.2013**
(21) Anmeldenummer: 07726335.8
(22) Anmeldetag: 12.02.2007
(51) Int. Cl.: F03D 11/00, F21S 8/00

(54) **WINDENERGIEANLAGE MIT FLUGBEFEUERUNGSEINRICHTUNG**
WIND TURBINE COMPRISING APPROACH LIGHTING
ÉOLIENNE COMPORTANT UN DISPOSITIF DE BALISAGE AÉRIEN

(30) Priorität: 16.02.2006 DE 102006007536
(43) Veröffentlichungstag der Anmeldung: 29.10.2008
(73) Patentinhaber: Wobben Properties GmbH, 26605 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2007/051312
(87) Internationale Veröffentlichungsnummer: WO 2007/093570

(56) Entgegenhaltungen:
- WO-A-03/104649
- WO-A-2006/092137
- DE-A1- 10 231 299
- MONTGOMERIE B: "OBSTACLE MARKINGS ON WIND TURBINES FOR SAFE AVIATION AND MARINE NAVIGATION" FOI MEMORANDUM, SWEDISH DEFENSE RESEARCH AGENCY,, SE, Nr. 979, August 2004 (2004-08), Seiten 1-10, XP001236059

## Beschreibung

Die Erfindung betrifft eine Windenergieanlage mit einer Flugbefeuerungseinrichtung.

Als allgemeiner Stand der Technik hierzu sei auf WO 01/86606, WO 97/29320, US 6 013 985, GB 2 315 123, GB 1 383 653, US 4 620 190 und die geltenden Vorschriften für den Betrieb von Flugbefeuerungseinrichtungen bei hohen Bauwerken, insbesondere bei Windenergieanlagen verwiesen.

Bei diesen Flugbefeuerungseinrichtungen gibt es verschiedene Varianten, regelmäßig sind die Flugbefeuerungseinrichtungen als sog. "Blitzleuchten" ausgestattet, so dass ein "Blinkfeuer" entsteht, welches sich durch eine bestimmte Zeitdauer des Aufleuchtens ("Hellphase") und eine entsprechende "Dunkelphase" auszeichnet, in der die Blitzleuchten ausgeschaltet sind.

Diese Flugbefeuerungseinrichtungen dienen insbesondere auch dem Luftverkehr zur Orientierung, damit die Kollision eines Flugzeugs mit einer Windenergieanlage vermieden wird. Gleichwohl ist aber auch darauf hinzuweisen, dass die Flugbefeuerungseinrichtung bei Offshore-Windenergieanlagen eingesetzt werden, um sicher eine Kollision zwischen einer Offshore-Windenergieanlage und einem Schiff oder einem anderen Wasserfahrzeug zu vermeiden.

Nun ist die ständige Aktivierung einer solchen Flugbefeuerungseinrichtung gerade nachts immer ein Problem, insbesondere dann, wenn sich die Windenergieanlage oder die Vielzahl von Windenergieanlagen - ein sog. Windpark - auf dem Lande befinden und sich die Windenergieanlagen in der Nähe von einer Ortschaft oder bewohnten Häusern befinden, denn durch die Blitzleuchten fühlt sich mancher Anwohner gestört und dies führt letztlich immer wieder dazu, dass die Windenergietechnik als solche auch insofern ein negatives Image bekommt. Aufgabe der vorliegenden Erfindung ist es, die bisherigen Beeinträchtigungen durch Flugbefeuerungseinrichtungen zu verringern.

Erfindungsgemäß wird eine Windenergieanlage mit den Merkmalen nach Anspruch 1 bzw. nach einem der weiteren Ansprüche vorgeschlagen. Vorteilhafte Weiterbildungen sind in den abhängigen Ansprüchen beschrieben.

Erfindungsgemäß ist die Flugbefeuerungseinrichtung der Windenergieanlage stets ausgeschaltet und stellt somit auch keine optische Beeinträchtigung der Anwohner dar. Die Flugbefeuerungseinrichtung der Windenergieanlage - oder die Flugbefeuerungseinrichtungen der Windenergieanlagen eines Windparks - schaltet/schalten sich erst dann ein, wenn sich ein Flugzeug, ein Fahrzeug, oder ein Schiff nähert.

Aus DE 102 31 299 A1 ist ein Kollisionswarnsystem für Windenergieanlagen bekannt, bei welchem ein Kollisionswarnsystem den Luftraum um eine Windenergieanlage herum überwacht und abhängig davon, ob eine Kollision mit einem Flugzeug zu erwarten ist, dann ein Gefahrenfeuer der Windenergieanlage anschaltet. Bei der erfindungsgemäßen Windenergieanlage hingegen gibt es eine direkte Kommunikation zwischen einem herankommenden Flugzeug einerseits und der Windenergieanlage bzw. einem in der Windenergieanlage installierten Empfänger andererseits, um somit dann, wenn sich das Flugobjekt auf eine bestimmte Entfernung angenähert hat und der Empfänger ein Signal aus dem Sender des Fluges empfängt, die Flugbefeuerungseinrichtung der Windenergieanlage automatisch einschaltet.

Somit weist die erfindungsgemäße Windenergieanlage (oder wenigstens eine Windenergieanlage eines Windparks) einen Empfänger auf, welcher in der Lage ist, ein vorbestimmtes Signal einer vorbestimmten Frequenz zu empfangen. Solange kein Signal empfangen wird, ist die Flugbefeuerungseinrichtung ausgeschaltet, wobei dem Empfänger ein Schaltwerk nachgeordnet ist, welches die entsprechenden Ein- bzw. Ausschaltsignale der Flugbefeuerungseinrichtung generiert. Wird ein Signal von dem Empfänger empfangen, so wird die Flugbefeuerungseinrichtung eingeschaltet und diese beginnt damit, in der üblichen Weise aufzuleuchten, z. B. einen bestimmten Rhythmus des An- und Ausschaltens in Form von Blitzleuchten anzunehmen.

Die Einschaltung der Flugbefeuerungseinrichtung kann ergänzend und/oder alternativ zu dieser vorgestellten Lösung auch davon abhängig gemacht werden, in welcher Empfangsfeldstärke das Signal empfangen wird, so dass das Einschalten erst dann erfolgt, wenn das signierende Fahrzeug eine vorbestimmte Entfernung zur Windenergieanlage angenommen hat. Dabei darf davon ausgegangen werden, dass von der Empfangsfeldstärke oder einem anderen in der Auswertung des Sendesignals auswertbaren Parameter auf die Entfernung des Senders und/oder Bewegung des Senders geschlossen werden. Es kann durch eine zeitlich aufeinanderfolgende Differenzmessung möglicherweise auch ermittelt werden, ob sich der Sender der Windenergieanlage nähert und daraus kann dann die Windenergieanlage eine Entscheidung ableiten, ob die Flugbefeuerungseinrichtung eingeschaltet wird, was dann sachgerecht ist, wenn aus der zeitlich aufeinanderfolgenden Messung sich eine Vergrößerung der Empfangsfeldstärke ergibt oder die Windenergieanlage wird ausgeschaltet, wenn sich aus der aufeinanderfolgenden Empfangsfeldstärkemessung ergibt, dass sich der Sender von der Windenergieanlage entfernt.

Wenn sich der Sender dem Empfänger nähert, so kann sich durch Ansteigen der Empfangsfeldstärke auch der Blitzrhythmus ändern, z. B. erhöhen, was dann, wenn der Sender in einem Flugzeug untergebracht ist, dem Piloten des Flugzeugs deutlich macht, dass er sich möglicherweise zu sehr der Windenergieanlage oder den Windenergieanlagen eines Windpark nähert und er dann auch entsprechende Ausweichmanöver einschlagen kann.

Eine weitere Variante kann auch darin bestehen, dass die Windenergieanlage nicht nur einen Empfänger aufweist, sondern auch einen Sender, welcher immer oder dann, wenn der Empfänger ein Signal von einem ersten Sender (der z. B. in einem Flugzeug untergebracht ist) empfängt, seinerseits eine Sendesignal aussendet, welches die Standortkoordinaten der Windenergieanlage, z. B. im GPS-Datenformat beinhaltet. Dieses Signal kann von dem Flugzeug empfangen werden, so dass durch eine bidirektionale Kommunikation zwischen dem Flugzeug (Schiff; Fahrzeug od. dergl.) und der Windenergieanlage auch der Pilot (oder die Autopilotanlage) im Flugzeug (der Kapitän auf dem Schiff), ohne die Flugbefeuerungseinrichtung selbst erkennt, dass er sich in der Nähe einer Windenergieanlage (oder eines Windparks) befindet, um die entsprechende Steuerung des Fahrzeugs (Flugzeugs) vorzunehmen.

Frequenzen, auf denen Sender bzw. Empfänger miteinander kommunizieren, können auch solche sein, die für die Freund-Feind-Kennung in der Militärtechnik reserviert sind.

Wenn das Sendesignal eine digitales Signal ist, kann durch eine dem Empfänger nachgeordnete Fehlererkennung auch aus der Fehlerrate auf die Entfernung des Senders zum Empfänger geschlossen werden und, wenn ein bestimmter Fehlerratenschwellwert unterschritten wird, wird dann eine Aktivierung der Flugbefeuerungseinrichtung veranlasst.

Mithin kann auch eine Fehlererkennungseinrichtung, die dem Empfänger der Windenergieanlage nachgeordnet ist, quasi als Ersatzparameter für die Feldstärkenmessung oder in Ergänzung hierzu eingesetzt werden, um entsprechende Schaltkriterien für das Aktivieren bzw. Deaktivieren der Flugbefeuerungseinrichtung zu generieren.

Bevorzugt ist die Flugbefeuerungseinrichtung auch mit einem Mikroprozessor ausgestattet, welcher die Aktivierungs- bzw. Deaktivierungszeiten aufnimmt und in einen Speicher memorisiert und weiter werden diese gespeicherten Daten auch zu einer zentralen Flugleitstelle weitergeleitet, die diese Daten zur Flug-überwachung verwenden können.

Die Übermittlung der Daten von der Windenergieanlage zu solch einer Flugleitstelle erfolgt über übliche technische Einrichtungen wie UKW, MW, FM, AM, Internetprotokolle, Modemverbindung oder GSM od. dergl.

Durch die Erfindung wird eine Flugbefeuerungseinrichtung erheblich weniger in Anspruch genommen als bisher, was letztlich der Verlängerung der Lebensdauer der Flugbefeuerungsreinrichtung dient und vor allem werden Anwohner der Windenergieanlagen deutlich weniger als bisher durch die Flugbefeuerungseinrichtung belästigt.

Besonders vorteilhaft ist es auch, wenn der Sender eine bestimmte sendereigene Kennung mit übermittelt, damit auch diese Kennung u. U. decodiert und mit aufgezeichnet werden kann. Auch kann die Mitübersendung einer Kennung dazu verwendet, dann die Aktivierung trotz Annäherung durch ein Flugzeug nicht durchzuführen, wenn dies gewünscht ist. So kann u. U. trotz Empfang eines Signals eines Senders die Aktivierung einer Flugbefeuerungseinrichtung nicht erwünscht sein, wenn es sich um einen militärischen Einsatz handelt und wenn eine besondere Kennung mitgeschickt wird, kann dann die Aktivierung unterbunden werden, wenn aus der Kennung ersichtlich ist, dass diese Kennung auf einem "Index" (einer Liste mit entsprechenden Kennungen) steht, welche nicht die übliche Einschaltung bzw. Aktivierung der Flugbefeuerungseinrichtung zur Folge haben sollen.

Wenn die Flugbefeuerungseinrichtung ein Uhrschaltwerk aufweist, kann auch durch entsprechende Signale an die Flugbefeuerungseinrichtung der Blitzrhythmus verändert werden. Eine Abschaltung der Flugbefeuerungseinrichtung wird erfindungsgemäß nicht sofort nach Ausfall des Sendesignals erzeugt, sondern die Flugbefeuerungseinrichtung schaltet sich erst dann aus, wenn eine bestimmte Zeitdauer nach Empfang des letzten Signals des Senders und/oder nach Unterschreiten eines bestimmten Schwellwerts des Empfangssignals erreicht worden ist.

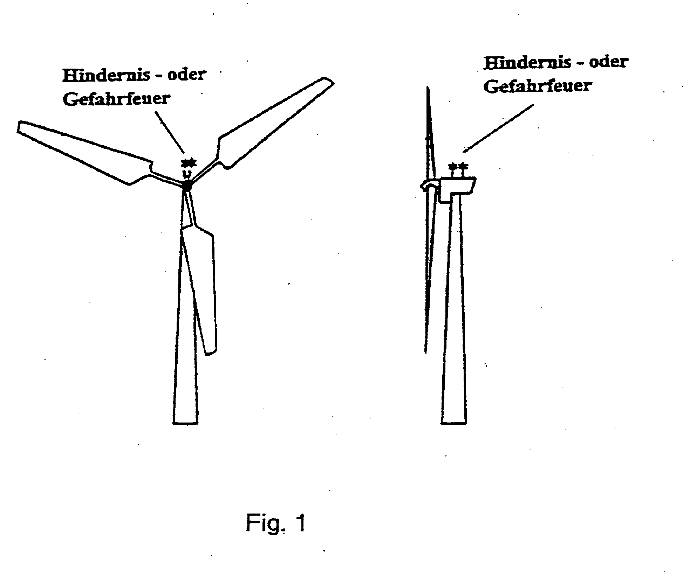

Figur 1 zeigt ein übliches Hindernis- oder Gefahrenfeuer. Der Inhalt der eingangs genannten Dokumente aus dem Stand der Technik wird ausdrücklich zum Inhalt der vorliegenden Anmeldung gemacht. Dieser allgemeine Stand der Technik zeigt vor allem den Aufbau einer Flugbefeuerungseinrichtung. Bevorzugt wird die Erfindung bei Windenergieanlagen in der Nähe eines Flugplatzes od. dergl. eingesetzt.

Die Flugbefeuerungseinrichtung kann Blitzleuchten aufweisen, die sich auf der Gondel einer Windenergieanlage befinden. Es ist aber auch möglich, dass sich die Leuchtmittel nicht auf der Gondel, sondern alternativ und/oder auch an den Rotorblättern, vorzugsweise an deren Blattspitzen befinden.

Eine als weitere Alternative oder auch in Ergänzung der vorstehenden Beschreibung auszubildende Variante der Erfindung besteht darin, dass entweder das Fahrzeug ein RF-ID Tag aufweist und/oder die Windenergieanlage mit einem RF-ID Tag ausgerüstet ist. Ist dann das Fahrzeug und/oder auch die Windenergieanlage mit einem Interogator ausgerüstet, welcher in der Lage ist, jeweils das RF-ID Tag zu einem Antwort-Code-Signal anzuregen (also beim Flugzeug funkt der Interogator das RF-ID Tag in der Windenergieanlage an, wenn die Windenergieanlage einen Interogator aufweist, dann funkt dieser den RF-ID Tag im Flugzeug an). Sobald der Interogator ein verwertbares Antwortsignal vom RF-ID Tag erhält, wird dies als Schaltsignal gewertet, um entweder die Flugbefeuerungseinrichtung in der gemäß vorliegender Anmeldung bereits beschriebenen Weise einzuschalten oder innerhalb des Flugzeugcockpits aufzuzeigen, dass man sich in der Nähe eines Windparks befindet und dass das Flugzeugcockpit stets über die Annäherung des eigenen Fahrzeugs an den Windpark informiert ist. Insbesondere kann der Empfang eines RF-ID Tag-Antwortsignals, welches auf der Windenergieanlage installiert ist, innerhalb des Cockpits dazu führen, praktisch die Situation einer Flugbefeuerungseinrichtung zu simulieren, denn entscheidend ist bekanntlich nicht, dass eine Flugbefeuerungseinrichtung einer Windenergieanlage eingeschaltet ist, sondern dass das Fahrzeug, was sich dem Windpark oder der Windenergieanlage nähert und mit dieser auf Kollisionskurs liegt, darauf aufmerksam gemacht wird, dass sich das Fahrzeug der Windenergieanlage oder einem Windpark nähert.

## Patentansprüche

1. Windenergieanlage mit einer Flugbefeuerungseinrichtung,
wobei die Flugbefeuerungseinrichtung auf der Gondel der Windenergieanlage oder auf den Rotorblättern, vorzugsweise an den Spitzen der Rotorblätter angeordnet ist,
wobei die Windenergieanlage einen Empfänger aufweist. welcher in der Lage ist, ein vorbestimmtes Signal von einem mobilen Sender zu empfangen, der in einem Fahrzeug untergebracht ist, welches sich der Windenergieanlage bis auf einen vorbestimmten Abstand nähert,
**dadurch gekennzeichnet, dass** bei Empfang des vorbestimmten Signals durch den Empfänger die Flugbefeuerungseinrichtung eingeschaltet wird und die Flugbefeuerungseinrichtung nicht sofort nach Ausfall des Sendesignals, sondern automatisch nach einer vorbestimmten Zeitdauer abgeschaltet wird, nachdem das Signal nicht mehr empfangen wird und/oder die Empfangsstärke des Signals einen vorbestimmten Wert unterschritten hat, und die Flugbefeuerungseinrichtung bei Annäherung des Fahrzeuges mit einem vorbestimmten Rhythmus aufleuchtet und dem Empfänger ein Schaltwerk nachgeordnet ist, welches die entsprechenden Ein- bzw. Ausschaltsignale der Flugbefeuerungseinrichtung generiert.

2. Windenergieanlage nach Anspruch 1,
**dadurch gekennzeichnet, dass** die Sendefrequenz, die der Sender aussendet, eine in der Luftfahrt und/oder Schifffahrt übliche Frequenz ist.

3. Windenergieanlage nach einem der vorhergehenden Ansprüche,
**dadurch gekennzeichnet, dass** das von dem Fahrzeug, insbesondere Flugzeug und/oder Schiff ausgesendete Signal eine vorbestimmte Kennung aufweist, die von einem Decoder, der in der Windenergieanlage angeordnet ist, decodierbar ist und dass die Flugbefeuerungseinrichtung eingeschaltet wird, wenn ein vorbestimmtes Kennsignal decodiert worden ist.

4. Windenergieanlage nach Anspruch 1.
**dadurch gekennzeichnet, dass** sich der Rhythmus, in dem die Flugbefeuerungseinrichtung aufleuchtet. bei weiterer Annäherung des Flugzeugs ändert, vorzugsweise sich die Ausschaltzeitdauer verkürzt.

5. Windenergieanlage nach einem der vorhergehenden Ansprüche,
**dadurch gekennzeichnet, dass** die Windenergieanlage die Empfangsstärke des Signals in einer Bewertungseinrichtung, die dem Empfänger nachgeordnet ist, bewertet und dieses Bewertungssignal dem Schaltwerk zugeführt wird, welches seinerseits abhängig von der Stärke des Empfangssignals die Einschaltdauer und/oder die Ausschaltdauer der Flugbefeuerungseinrichtung bestimmt,

6. Windenergieanlage nach Anspruch 1,
**dadurch gekennzeichnet, dass** die Flugbefeuerungseinrichtung mit einem Mikroprozessor ausgestattet ist, welcher die Aktivierungszeiten bzw. Deaktivierungszeiten aufnimmt und in einem Speicher memorisiert.

## Claims

1. A wind power installation having an aviation light arrangement,
the aviation light arrangement being disposed on the nacelle of the wind power installation or on the rotor blades, preferably at the tips of the rotor blades,
the wind power installation having a receiver which is capable of receiving a predetermined signal from a mobile transmitter accommodated in a vehicle which approaches the wind power installation up to a predetermined distance,
**characterised in that**, when the predetermined signal is received by the receiver, the aviation light arrangement is switched on and the aviation light arrangement is not switched off immediately after dropout of the transmitted signal but is switched off automatically after a predetermined period of time after the signal is no longer received and/or after the receiving strength of the signal has fallen below a predetermined value, and the aviation light arrangement lights up with a predetermined rhythm on approach of the vehicle, and there is disposed downstream of the receiver a switching device which generates the corresponding switch-on and switch-off signals of the aviation light arrangement.

2. A wind power installation according to claim 1,
**characterised in that** the transmitting frequency emitted by the transmitter is a frequency that is usual in aviation and/or shipping.

3. A wind power installation according to one of the preceding claims,
**characterised in that** the signal emitted by the vehicle, especially an aircraft and/or a ship, has a predetermined identification which can be decoded by a decoder disposed in the wind power installation, and the aviation light arrangement is switched on when a predetermined identification signal has been decoded.

4. A wind power installation according to claim 1,
**characterised in that** the rhythm in which the aviation light arrangement lights up changes upon further approach of the vehicle, preferably the off period becomes shorter.

5. A wind power installation according to any one of the preceding claims, **characterised in that** the wind power installation evaluates the receiving strength of the signal in an evaluation device disposed downstream of the receiver, and that evaluation signal is supplied to the switching device which in turn determines the on period and/or the off period of the aviation light arrangement in dependence on the strength of the received signal.

6. A wind power installation according to claim 1,
**characterised in that** the aviation light arrangement is equipped with a microprocessor which records the activation times and deactivation times and memorises them in a memory.

## Revendications

1. Centrale éolienne comprenant un mécanisme de balisage aérien, le mécanisme de balisage aérien étant disposé sur la nacelle de la centrale éolienne ou bien sur les pales du rotor, de préférence aux pointes des pales du rotor, la centrale éolienne présentant un récepteur qui est en mesure de recevoir un signal prédéfini envoyé par un émetteur mobile qui est monté dans un véhicule qui se rapproche de la centrale éolienne jusqu'à une distance prédéfinie, **caractérisée en ce que**, lors de la réception du signal prédéfini par le récepteur, le mécanisme de balisage aérien est enclenché et le mécanisme de balisage aérien est coupé, non pas directement après la disparition du signal, mais automatiquement après un laps de temps prédéfini après que le signal n'est plus reçu et/ou après que l'intensité de réception du signal a dépassé vers le bas une valeur prédéfinie, et le mécanisme de balisage aérien, lors de l'approche du véhicule, s'allume à un rythme prédéfini, et un dispositif de commande est monté à la suite du récepteur, qui génère les signaux correspondants de déclenchement, respectivement de coupure du mécanisme de balisage aérien.

2. Centrale éolienne selon la revendication 1, **caractérisée en ce que** la fréquence d'émission émise par l'émetteur représente une fréquence habituelle dans l'aviation et/ou dans la marine.

3. Centrale éolienne selon l'une quelconque des revendications précédentes, **caractérisée en ce que** le signal émis par le véhicule, en particulier par l'avion et/ou par le bateau, présente un indicatif prédéfini qui peut être décodé par un décodeur qui est monté dans la centrale éolienne et **en ce que** le mécanisme de balisage aérien est enclenché lorsqu'un signal d'identification prédéfini a été décodé.

4. Centrale éolienne selon la revendication 1, **caractérisée en ce que** le rythme en fonction duquel le mécanisme de balisage aérien s'allume se modifie lorsque l'approche de l'avion augmente, de préférence de telle sorte que la durée de coupure se raccourcit.

5. Centrale éolienne selon l'une quelconque des revendications précédentes, **caractérisée en ce que** la centrale étolienne évalue l'intensité de réception du signal dans un mécanisme d'évaluation qui est monté à la suite du récepteur et transmet ce signal d'évaluation au dispositif de commande qui, quant à lui, détermine, en fonction de l'intensité du signal de réception, la durée d'enclenchement et/ou la durée de coupure du mécanisme de balisage aérien.

6. Centrale éolienne selon la revendication 1, **caractérisée en ce que** le mécanisme de balisage aérien est équipé d'un microprocesseur qui enregistre les temps d'activation respectivement les temps de désactivation et qui les met en mémoire.
